# EUROPEAN PATENT SPECIFICATION

(11) **EP 0 349 006 B1**
(45) Date of publication and mention of the grant of the patent: **04.09.1996**
(21) Application number: 89111992.7
(22) Date of filing: 30.06.1989
(51) Int. Cl.: G02F 1/1335

(54) **Liquid crystal apparatus**
Flüssigkristall-Vorrichtung
Dispositif à cristal liquide

(30) Priority: 01.07.1988 JP 165660/88
(43) Date of publication of application: 03.01.1990
(73) Proprietor: CANON KABUSHIKI KAISHA, Tokyo (JP)
(72) Inventor: Kawagishi, Hideyuki, Fujisawa-shi Kanagawa-ken (JP); Enomoto, Takashi, Zama-shi Kanagawa-ken (JP); Iwamoto, Hirofumi, Hiratsuka-shi Kanagawa-ken (JP)
(74) Representative: Bühling, Gerhard, Dipl.-Chem.

(56) References cited:
- JP-A-63 048 522
- US-A- 4 556 288
- US-A- 4 737 018
- PATENT ABSTRACTS OF JAPAN, vol. 9, no. 68 (P-344)[1791], 28th March 1985; & JP-A-59 202 435
- PATENT ABSTRACTS OF JAPAN, vol. 8, no. 163 (P-290)[1600], 27th July 1984; & JP-A-59 58 421

## Description

### FIELD OF THE INVENTION AND RELATED ART

The present invention relates to a liquid crystal apparatus using a liquid crystal, particularly a ferroelectric liquid crystal apparatus with suppressed color irregularity.

Clark and Lagerwall have disclosed a surface-stabilized bistable ferroelectric liquid crystal in Applied Physics Letters, Vol. 36, No. 11 (June 1, 1980), p.p. 899 - 901, and U.S. Patents Nos. 4,367,924 and 4,563,059. The bistable ferroelectric liquid crystal has been realized by disposing a chiral smectic liquid crystal between a pair of substrates which are set to provide a spacing small enough to suppress the formation of a helical arrangement of liquid crystal molecules inherent to the bulk chiral smectic phase of the liquid crystal and aligning vertical molecular layers each composed of a plurality of liquid crystal molecules in one direction.

Furthermore, document US-A-4 737 018 discloses a liquid crystal apparatus wherein transparent electrodes are provided on a pair of substrates and a liquid crystal layer is disposed between said substrates. The thickness of the transparent electrodes is given by the formula [550/(2n)] nm, wherein n is the refractive index of the electrode. The thickness of the transparent electrode and an insulating layer, which have to be considered as one multi-layered film, is calculated in order to set its reflection to a certain value, thereby reducing reflections of external light, in particular reflections from the surface boundary of the transparent electrode, for providing a liquid crystal display panel with a good contrast.

Moreover, document JP-A-63-193 206, discloses a liquid crystal apparatus wherein a pair of electrodes is provided on a pair of substrates and a liquid crystal layer is disposed between the substrates. The aforementioned structure is illuminated by a three-wavelength fluorescent light source.

Additionally, document JP-A-59-202 435, discloses a liquid crystal apparatus comprising antireflection films which are disposed inside and outside of the liquid crystal apparatus, these antireflection films being two three-layered antireflection films provided on the upper surface of the display device and on the surface of the transparent electrode lying next to the aforementioned upper surface, respectively, to reduce the reflection of external light. The multi-layered film on the upper surface of the transparent electrode comprises a layer (6) which refractive index is higher than the refractive index of the transparent electrode. Moreover, the layers of the three-layered film have an optical thickness of λₒ/4 and λₒ/2, respectively, that is their thicknesses are predetermined by the central wavelength λₒ in the wavelength region whose reflection is to be prevented. Thus, reflection merely can be prevented in case all thickness of the different layers of the multi-layered reflection film, which comprises the transparent electrode, do fulfill the aforementioned conditions.

Further, document JP-A-59-58 421 discloses a liquid crystal apparatus wherein a liquid crystal is positioned between a front substrate and a back substrate. The back substrate has a special refractive index. The illumination light is transmitted in an "on" state of the liquid crystal apparatus and is reflected totally in an "off" state. The back substrate serves for good illumination.

In these prior art apparatuses the transmittance through an actual ferroelectric liquid crystal cell is, however, not sufficiently large, so that a backlight of a high luminance has been required for a display.

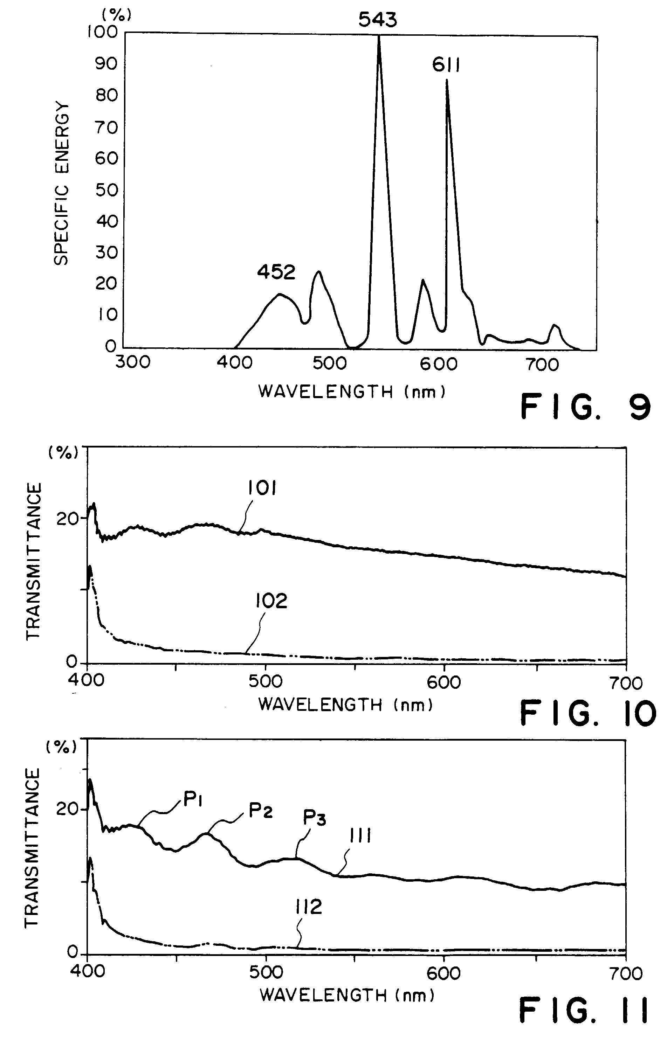

As a high luminance light source, there has been known a light source giving a sharp peak of specific energy (%), particularly a fluorescent light source comprising at least two types of fluophors or fluorescent substances having different emission peak wavelengths (e.g., "FL40SS-EX 37S" available from Toshiba K.K, giving a spectral emission characteristic as shown in Figure 9). When such a light source is used as a backlight for ferroelectric liquid crystal panels as described above, there has been caused problems, such as occurrence of color irregularity due to an uneven thickness of a liquid crystal layer and occurrence of changes in hue over the entire panel face corresponding to changes in viewing directions.

### SUMMARY OF THE INVENTION

An object of the present invention is, in view of the above problems, to provide a ferroelectric liquid crystal apparatus preventing the occurrence of color irregularity or change in hue while maintaining a bright display state.

According to the invention this object is accomplished by a liquid crystal apparatus, comprising: a liquid crystal cell comprising a pair of substrates each having thereon a transparent electrode, and a liquid crystal layer disposed between said pair of substrates; characterized in that said transparent electrodes have a thickness of 84 nm or less, 132 to 168 nm, 196 to 247 nm or 318 to 385 nm; said liquid crystal layer has a thickness of 5 µm or less; a fluorescent light source is placed behind said liquid crystal cell from a viewing direction thereof and illuminates said liquid crystal cell, said fluorescent light source providing at least three peaks of specific emission energy; and said pair of substrates each have thereon said transparent electrode and a dielectric film having a larger refractive index than said transparent electrode.

These and other objects, features and advantages of the present invention will become more apparent upon a consideration of the following description of the preferred embodiments of the present invention taken in conjunction with the accompanying drawings.

### BRIEF DESCRIPTION OF THE DRAWINGS

Figure 1 is a schematical sectional view of a liquid crystal apparatus according to the present invention.

Figures 2 to 7 show changes in transmittances of a prior art liquid crystal cell due to changes in a direction of observation.

Figure 8A is a schematic plan view of a liquid crystal cell for explanation of an angle θₛₐₘₚ, and Figure 8B is a corresponding side view for explanation of an angle θᵢₙ.

Figures 10 and 11 show spectral transmission characteristic curves for a liquid crystal apparatus of the present invention and a comparative example liquid crystal apparatus, respectively.

Figure 12 is a chromaticity diagram on a u*-v* coordinate system showing a locus of chromaticity points varying depending on changes in thickness of the liquid crystal layer of a liquid crystal apparatus of the present invention. Figure 13 is a corresponding chromaticity diagram for a comparative liquid crystal apparatus.

Figure 14 is a chromaticity diagram on a u*-v* coordinate system showing a locus of chromaticity points varying depending on changes in angle θᵢₙ for a liquid crystal apparatus of the present invention. Figure 15 is a corresponding chromaticity diagram for a comparative liquid crystal apparatus.

Figure 16 is a chromaticity diagram on a u*-v* coordinate system showing chromaticity points for a liquid crystal apparatus of the present invention and a comparative liquid crystal apparatus.

Figure 17 is a schematic sectional view of another liquid crystal apparatus according to the invention.

Figure 18 is a diagram showing a relationship between angle |Δθᵤᵥ| (deg.) and ITO film thickness.

Figures 19 and 20 are schematic perspective views for illustrating the ferroelectric liquid crystal cell used in the present invention.

### DESCRIPTION OF THE PREFERRED EMBODIMENTS

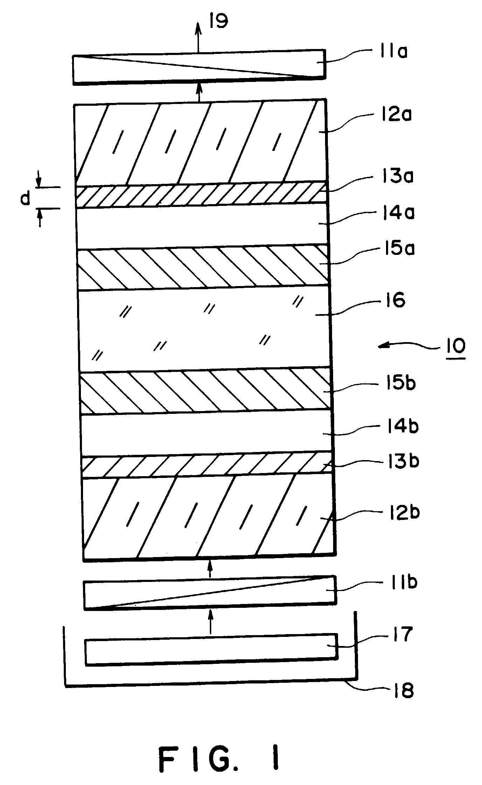

Figure 1 is a schematic sectional view of a liquid crystal apparatus according to the present invention including a ferroelectric liquid crystal cell 10. The liquid crystal cell 10 comprises two glass substrates 12a and 12b having thereon transparent electrodes 13a and 13b, dielectric films 14a and 14b, and alignment films 15a and 15b, respectively, and a ferroelectric liquid crystal 16, i.e. a liquid crystal layer, disposed between the two substrates 12a and 12b. On both sides of the ferroelectric liquid crystal cell 10, polarizers 11a and 11b are disposed in a cross nicol relationship. Behind the polarizer 11b is disposed a backlight 17, i.e. a fluorescent light source, and a reflection plate 18 so as to provide transmitted light 19 through the liquid crystal cell 10.

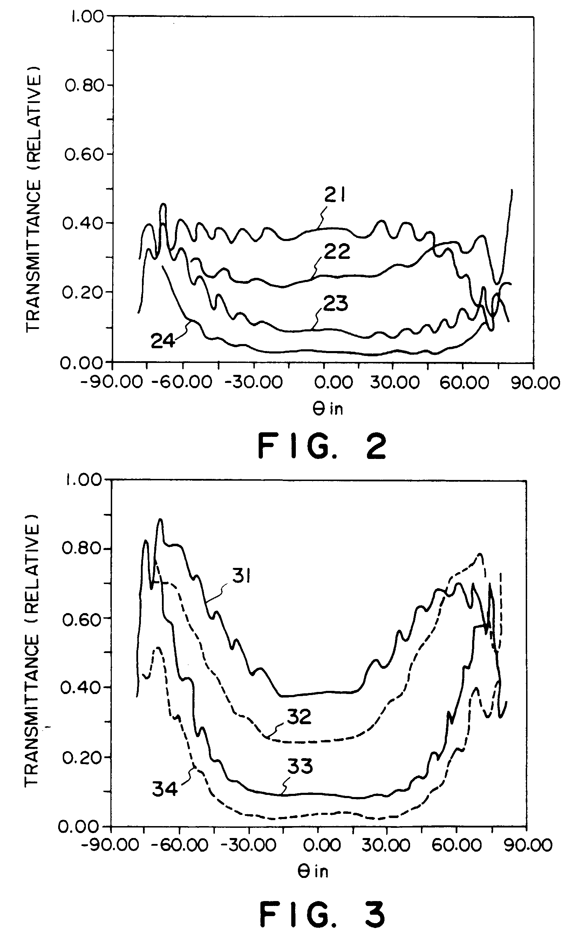

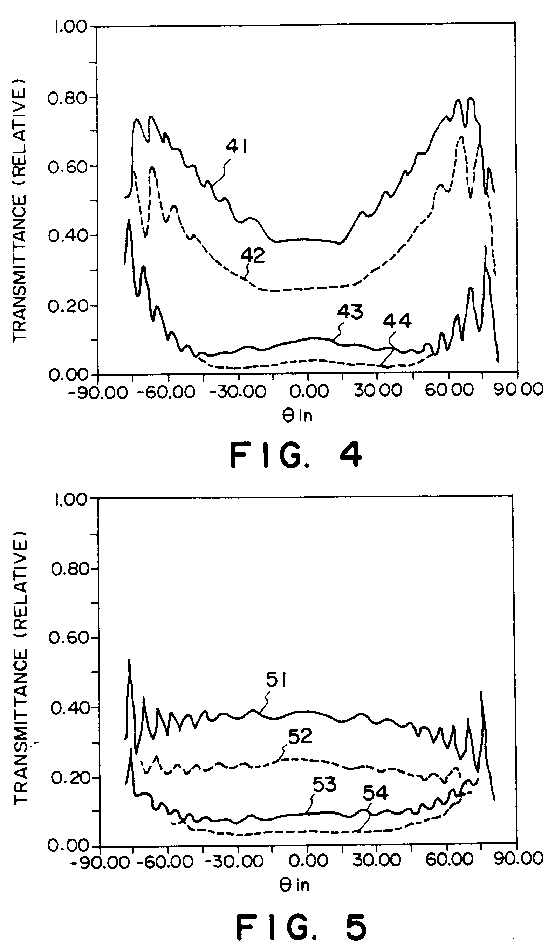

Figures 2 through 7 illustrate the changes in transmittance through a prior art liquid crystal cell A having such a cell structure as shown in Figure 1 and having the following dimensions corresponding to the changes in direction of observation.

### Cell A

Substrates 12a, 12b:
1.1 mm-thick glass plates

Transparent electrodes 13a, 13b:
115 nm (1150 Å)-thick film of ITO (refractive index = 1.92)

Dielectric films 14a, 14b:
45 nm (450 Å)-thick film of SiO₂ (refractive index = 1.47)

Alignment films 15a, 15b:
60 nm (600 Å)-thick film of polyimide (refractive index = 1.67)

Ferroelectric liquid crystal 16:
averagely 1.5 µm-thick layer of CS-1014 (available from Chisso K.K. n_{⊥} = 1.55, n_{//} = 1.70; maximum tilt angle = 20 degrees, tilt angle in the liquid crystal cell under no electric field = 8 degrees, pre-tilt angle in SmA phase 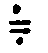 0 degree.

Polarizers 11a, 11b:
disposed in right angle cross nicols so as to provide the darkest state under no electric field.

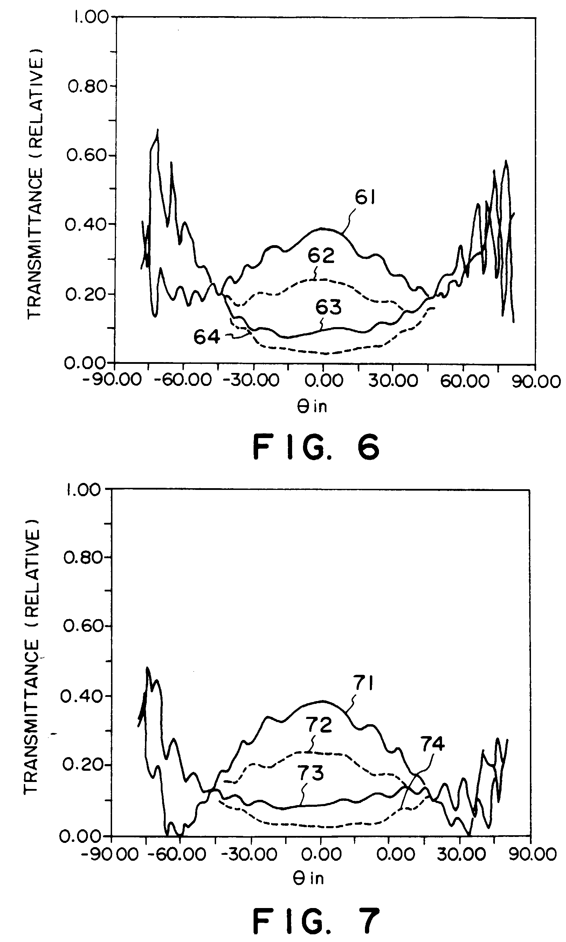

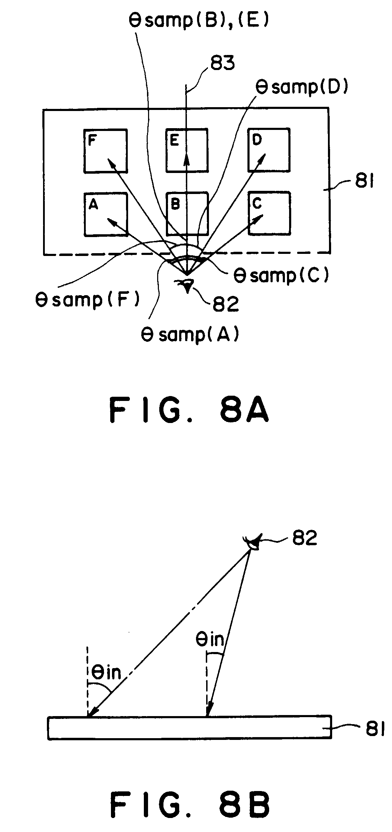

The changes in observation direction are summarized in the following Table 1 along with identification of curves in Figure 7 with reference to Figures 8A and 8B.

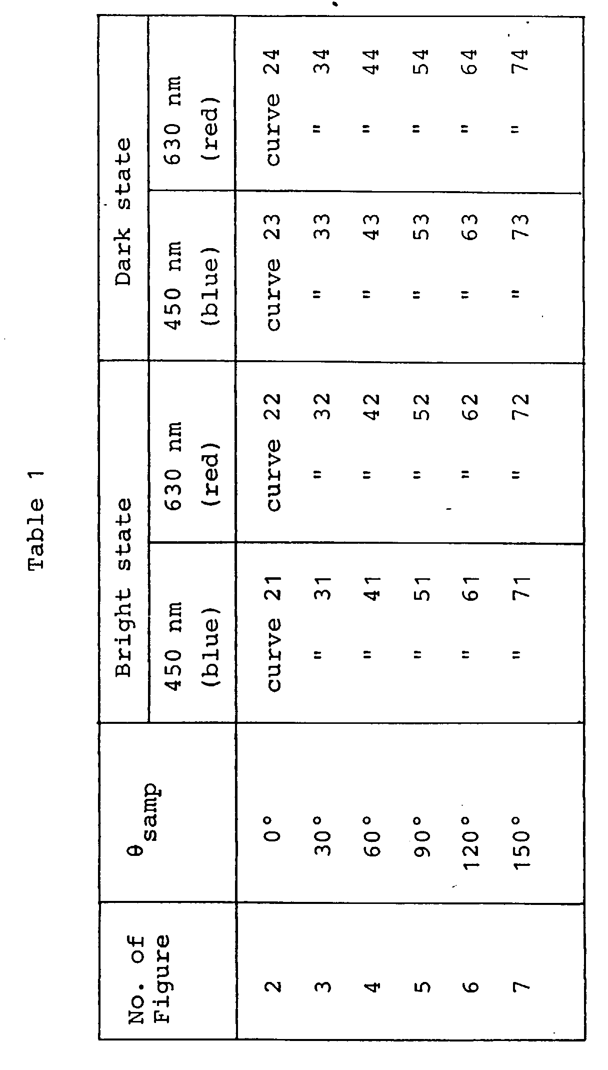

More specifically, Figure 8A is a plan view illustrating a ferroelectric liquid crystal panel 81 placed horizontally and observed from an observation eye 82. On the liquid crystal panel 81, noted picture regions A - F are shown. A direction 83 is defined as the horizontal component of an observation direction passing along the center of the picture from the observation eye 82 placed at an ordinary observing position. Angles θₛₐₘₚ (A) - (F) are defined as angles of the horizontal directions from the observation eye 82 to the noted picture regions A - F, respectively, with respect to the horizontal direction 83. Figure 8B is a side view corresponding to Figure 8A and shows an angle θᵢₙ defined as an angle of the vertical component of an observation direction from the observation eye 82 to a noted region with respect to a normal to the ferroelectric liquid crystal panel 81.

Figures 2 to 7 show that such a ferroelectric liquid crystal panel having 115 nm (1150 Å)-thick ITO transparent electrodes 13a and 13b causes color irregularity due to changes in angles θₛₐₘₚ and θᵢₙ because it provides different transmittances for blue light (450 nm) and red light (632 nm).

According to the present invention, however, it has become possible to suppress the occurrence of such color irregularity attributable to multiple interference under irradiation from a three-wavelength light source having a spectral emission characteristic as shown in Figure 9 by using a transparent electrode of preferably ITO (indium-tin-oxide) having a thickness of 84 nm (840 Å) or less (particularly 72 nm (720 Å) or less but practically 5 nm (50 Å) or more), 132-168 nm (1320-1680 Å), 196-247 nm (1960- 2470 Å) or 318-385nm (3180 - 3850 Å) for a transparent electrode 13a and/or a transparent electrode 13b.

In a preferred embodiment of the present invention, the glass substrates 12a and 12b are caused to have a refractive index n satisfying a relationship of:${\text{n}}_{\text{⊥}} {\text{- 0.1 ≦ n ≦ n}}_{\text{//}} \text{+ 0.1,}$ wherein n_{⊥} and n_{//} denote the refractive indices along the shorter (minor) molecular axis and longer (major) molecular axis, respectively, of a liquid crystal used as measured by the optical interference method. In this instance, it is further preferred that the dielectric films 14a and 14b and the alignment films 15a and 15b also have a similar refractive index, i.e., a value n satisfying the above relationship.

Figure 10 is a graph showing spectral transmittances in bright and dark states under the condition of θᵢₙ = 0 degree through a ferroelectric liquid crystal cell B having a cell structure as shown in Figure 1 and the same dimensions as the above-mentioned prior art liquid crystal cell A except for the thickness of the transparent ITO electrodes 13a and 13b was changed to 10 nm (100 Å). The transmittance curve 101 represents one in the bright state and the curve 102 represents one in the dark state.

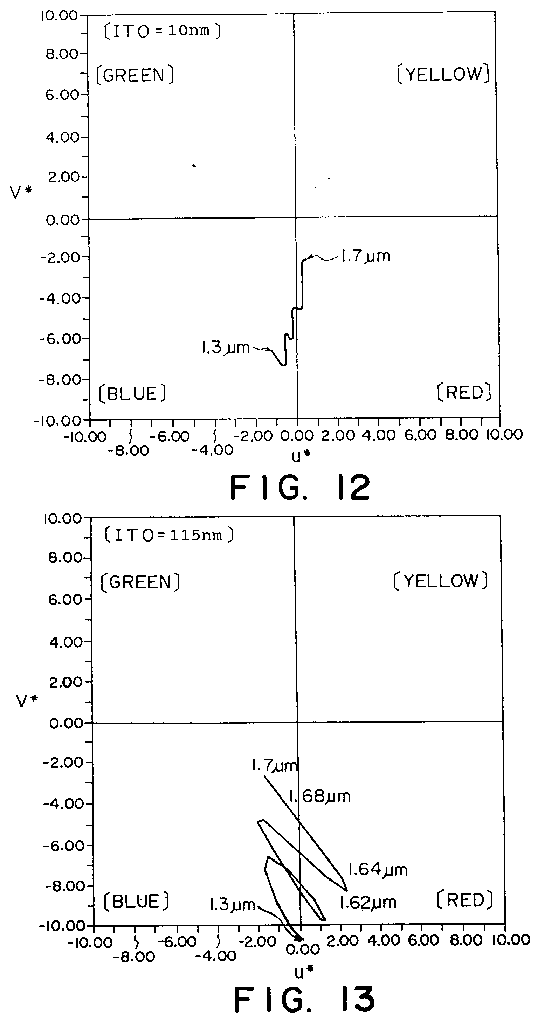

Figure 11 shows the corresponding spectral transmittance in bright and dark states of the comparative ferroelectric liquid crystal cell A described above. The curve 111 represents the transmittance in the bright state and the curve 112 illustrates one in the dark state.

In view of Figures 10 and 11 in comparison, the transmittance curve 111 of the comparative liquid crystal cell A in Figure 11 provides a remarkable peaks P₁, P₂, P₃, ... at intervals of 20 - 50 nm showing a fluctuation in transmittance compared with the curve 101 of the liquid crystal cell B in Figure 10.

The above-mentioned liquid crystal cells A and B were respectively provided with a backlight (FL40 SS-EX 37-S) having a spectral emission characteristic as shown in Figure 9 and subjected a panel test wherein the occurrence of color irregularity under illumination from the backlights was evaluated by arbitrarily selected 20 panelists while variously changing the values of θᵢₙ and θₛₐₘₚ. As a result, the comparative liquid crystal cell A was judged to cause a color irregularity by 18 of the 20 panelists, whereas the liquid crystal cell B was judges to be free from color irregularity by 19 of the 20 panelists.

Figure 12 is a chromaticity diagram on the u*-v* coordinate system according to the CIE 1976 (L*u*v*) Space (JIS Z8729-1980) showing the changes of chromaticity points corresponding to changes in liquid crystal layer thickness for a type of liquid crystal cell B. More specifically, a cell having a structure basically the same as the above-mentioned liquid crystal cell B but having a relatively large fluctuation in liquid crystal layer thickness was provided. Points having liquid crystal layer thicknesses of 1.3 µm, 1.4 µm, 1.5 µm, 1.6 µm and 1.7 µm were identified by using a Berek compensator, and the u* and v* coordinates at respective thickness portions were measured under the condition of θᵢₙ = 0 by means of a luminance meter (e.g., "BM-7" available from Tokyo Kogaku Kikai K.K.) according to the CIE 1976 (L*u*v*) Space while "white" of the standard light C (JIS Z8720) was taken at the coordinate original. Figure 13 is a similar chromaticity diagram obtained with respect to a type of liquid crystal cell A.

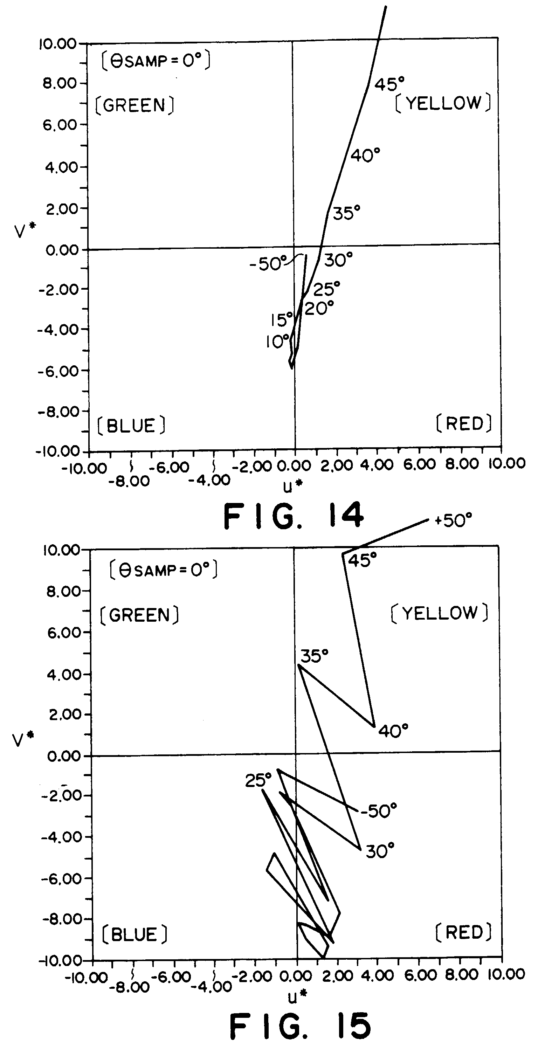

Figure 14 shows the locus of the chromaticity point on the u*-v* coordinate system of liquid crystal cell B obtained by changing θᵢₙ (Figure 8B) under the condition of θₛₐₘₚ (Figure 8A) = 0. Figure 15 shows the locus of the chromaticity point on the u*-v* coordinate system of liquid crystal cell A obtained by changing the θᵢₙ under θₛₐₘₚ = 0. the numbers (degrees) shown along the loci on Figures 14 and 15 denote the numbers in degree of θᵢₙ.

Figures 12 - 15 show that the type of liquid crystal cell B of the present invention does not cause sensitive color change corresponding to changes in cell thickness and viewing angle (incident angle), while the cell of the type of liquid crystal cell A (comparative) causes a sensitive color change in response to changes in cell thickness and viewing angle.

In other words, it is understood that the cell of the type of liquid crystal cell A (comparative example) causes a remarkable change in color irregularity or change in hue due to a fluctuation in thickness of +0.1 µm or less (e,g., ± 10 nm (100Å)) or a change in viewing angle θᵢₙ on the order of ±2.5 degrees, whereas the cell of the present invention (see liquid crystal cell B) does not cause noticeable color irregularity in response to a fluctuation in thickness of ± 0.1 µm or less or a change in viewing angle on the order of ±2.5 degrees, thus being a cell not liable to cause color irregularity because an ordinary man has a recognizable pupil parallatic angle of about 2.5 degrees.

In another preferred embodiment of the present invention, the dielectric films 14a and 14b in the ferroelectric liquid crystal cell 10 shown in Figure 1 may be composed of Ta₂O₅ or TiO₂ to accomplish the above-mentioned objects.

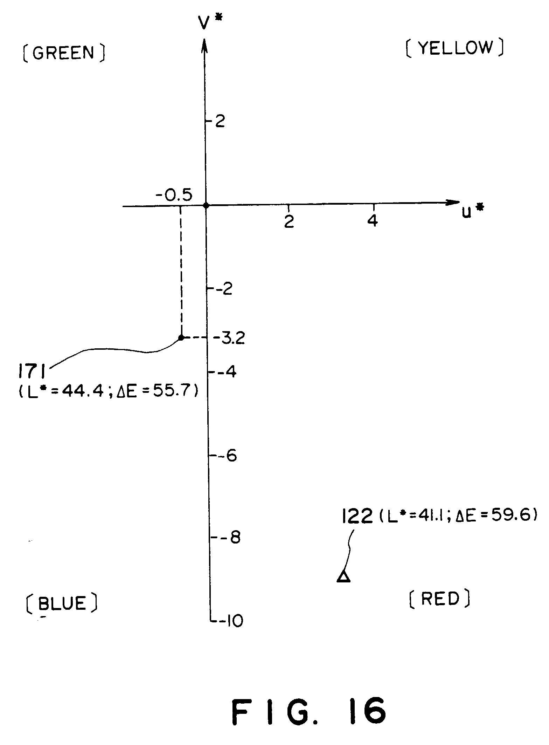

Figure 16 shows a chromaticity point 171 given by such a liquid crystal cell 10 having 63 nm (630 Å)-thick dielectric films 14a and 14b of Ta₂O₅ having a refractive index of 2.1 in combination with 67 nm (670 Å)-thick transparent electrodes 13a and 13b of ITO having a refractive index of 1.92.

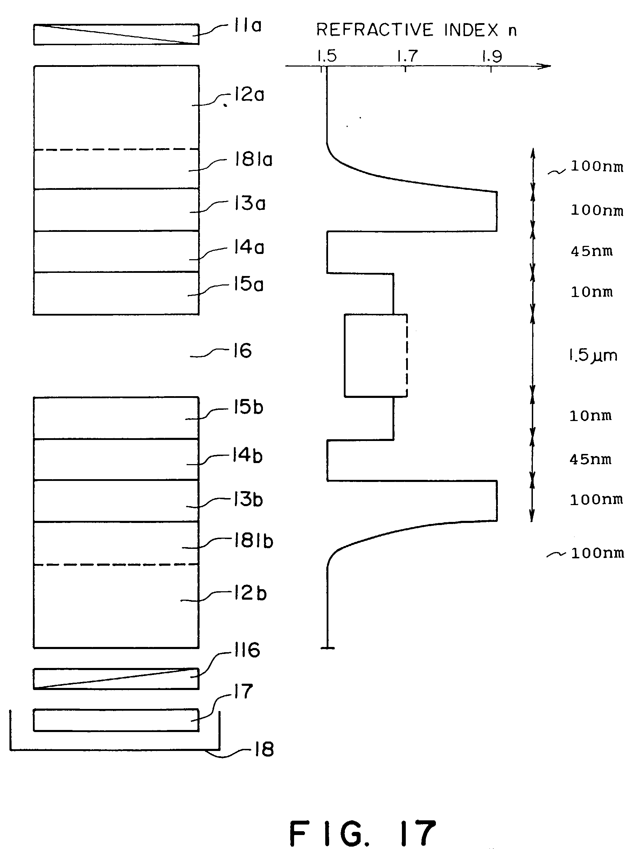

In still another preferred embodiment of the present invention, the refractive index of at least a part of the glass substrate, the transparent electrode film and the dielectric film may be changed stepwise or continuously so as to minimize a refractive index difference at a boundary between the layers. Figure 17 schematically illustrates such an embodiment with its sectional view on the left side and an accompanying refractive index distribution on the right side. Such stepwise on continuous change in refractive index may for example be accomplished by the external diffusion method or the metal diffusion method (see, e.g., "Kohha Denshi Kagaku (Light Wave Electronic Optics)" published from Corona Sha K.K., p.p. 298 - 299). Specifically, in the embodiment shown in Figure 17, Ti-diffused glass layers 181a and 181b having a refractive index distribution gradually changing in the direction of thickness were prepared by thermal diffusion of Ti from the surfaces of the glass substrates 12a and 12b. Because of the Ti-diffused glass layers 181a and 181b having gradually changing refractive indices, a particularly problematic boundary reflection at the boundary between the ITO and glass in a comparative cell (liquid crystal cell A) was minimized to suppress the occurrence of interference peaks attributable to boundary reflection through an entire cell, whereby color irregularity was obviated.

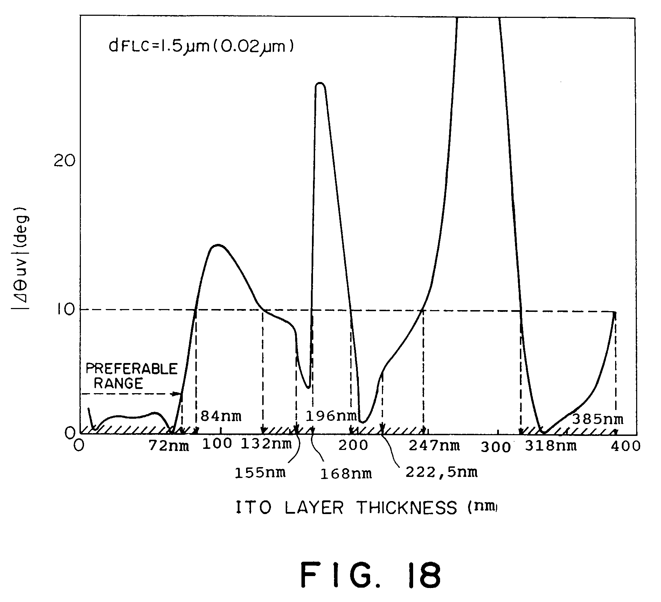

Figure 18 shows changes in |Δθ_{UV}| (deg.) corresponding to changes in thickness of the transparent electrodes 13a and 13b of ITO in various ferroelectric liquid crystal cells 10 (type of liquid crystal cell B) each having a different electrode thickness. Herein, |Δθᵤᵥ| denotes an angle Lθ_{uv·.max}.O.θ_{uv·.min}, wherein θ_{uv.max} denotes a chromaticity point given by a part of a maximum liquid crystal layer thickness in a cell, θ_{uv.min} denotes a chromaticity point given by a part of a minimum liquid crystal layer thickness in the cell, and O denotes the original (taken as "white" of the standard light C), respectively, on a u*-v* coordinate system according to the CIE 1976 (L*u*v*) Space. Thus, |Δθᵤᵥ| means an angle between a line O-θ_{uv.max} and a line O-θ_{uv.min}.

According to our experiments, the occurrence of color irregularity was effectively suppressed where |Δθᵤᵥ| was 9 degrees or less, preferably 3 degrees or less. For this purpose, the thickness of transparent electrode (ITO) was set to 84 nm (840 Å) or less, 132-168 nm (1320 - 1680 Å), 196 - 247 nm (1960 - 2470 Å), or 318-385 nm (3180 - 3850 Å). As shown in Figure 18, the ITO film thickness was particularly preferably in the range of 72 nm (720 Å) or less (but practically 5 nm (50 Å) or more), 155-168 nm (1550-1680 Å) or 196-225 nm (1960 - 2250 Å). Particularly, cells similar to liquid crystal cell B but having 160 nm (1600 Å)-thick ITO films and 200 nm (2000 Å)-thick films instead of 10 nm (100 Å)-thick ITO films showed similarly good results as the above-mentioned liquid crystal cell B.

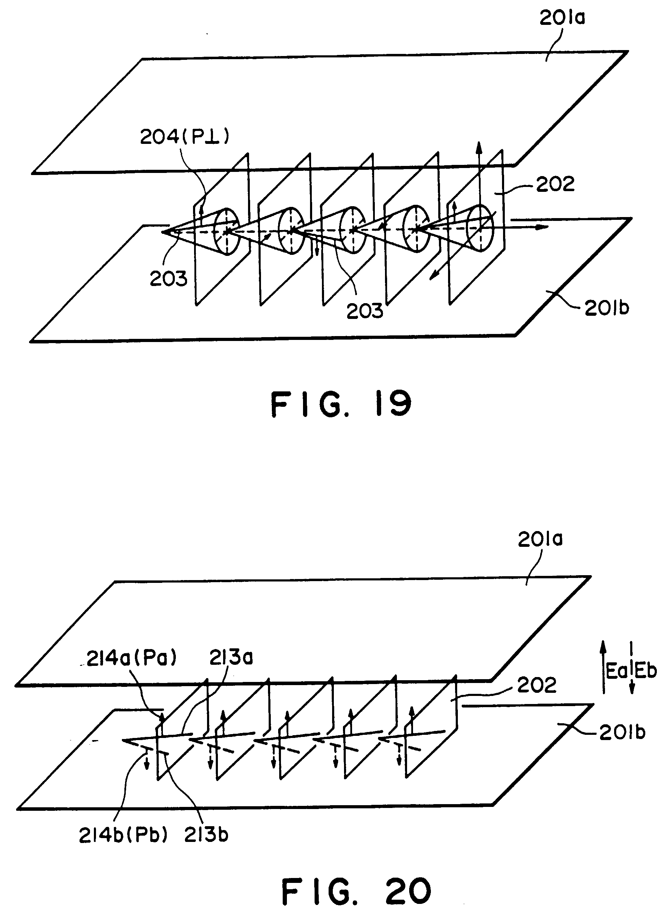

Referring to Figure 19, there is schematically shown an example of a ferroelectric liquid crystal cell. Reference numerals 201a and 201b denote substrates (glass plates) on which a transparent electrode of, e.g., In₂O₃, SnO₂, ITO (indium-tin-oxide), etc., is disposed, respectively. A liquid crystal of an SmC*-phase in which liquid crystal molecular layers 202 are oriented perpendicular to surfaces of the glass plates is hermetically disposed therebetween. A full line 203 shows liquid crystal molecules. Each liquid crystal molecule 203 has a dipole moment (P_{⊥}) 204 in a direction perpendicular to the axis thereof. When a voltage higher than a certain threshold level is applied between the transparent electrodes formed on the substrates (glass plates) 201a and 201b, a helical or spiral structure of the liquid crystal molecule 203 is unwound or released to change the alignment direction of respective liquid crystal molecules 203 so that the dipole moments (P_{⊥}) 204 are all directed in the direction of the electric field. The liquid crystal molecules 203 have an elongated shape and show refractive anisotropy between the long axis and the short axis thereof. Accordingly, it is easily understood that when, for instance, polarizers arranged in a cross nicol relationship, i.e., with their polarizing directions crossing each other, are disposed on the upper and the lower surfaces of the substrates (glass plates) 201a and 201b, the liquid crystal cell thus arranged functions as a liquid crystal optical modulation device of which optical characteristics vary depending upon the polarity of an applied voltage. Further, when the thickness of the liquid crystal cell is sufficiently thin (e.g., 1 µm), the helical structure of the liquid crystal molecules is released without application of an electric field whereby the dipole moment assumes either of the two states, i.e., Pa in an upper direction 214a or Pb in a lower direction 214b thus providing a bistability condition, as shown in Figure 20. When an electric field Ea or Eb higher than a certain threshold level and different from each other in polarity as shown in Figure 20 is applied to a liquid crystal cell having the above-mentioned characteristics, the dipole moment is directed either in the upper direction 214a or in the lower direction 214b depending on the vector of the electric field Ea or Eb. In correspondence with this, the liquid crystal molecules 203 are oriented to either a first orientation state 213a or a second orientation state 213b.

When the above-mentioned ferroelectric liquid crystal is used as an optical modulation element, it is possible to obtain two advantages. First is that the response speed is quite fast. Second is that the orientation of the liquid crystal shows bistability. The second advantage will be further explained, e.g., with reference to Figure 20. When the electric field Ea is applied to the liquid crystal molecules 203, they are oriented in the first stable state 213a. This state is stably retained even if the electric field Ea removed. On the other hand, when the electric field Eb of which direction is opposite to that of the electric field Ea is applied thereto, the liquid crystal molecules 203 are oriented to the second orientation state 213b whereby the directions of liquid crystal molecules 203 are changed. Likewise, the latter state is stably retained even if the electric field Eb is removed. Further, as long as the magnitude of the electric field Ea or Eb being applied is not above a certain threshold value, the liquid crystal molecules 203 are placed in the respective orientation states 213a or 213b. In order to effectively realize high response speed and bistability, it is preferable that the thickness of the liquid crystal cell is as thin as possible, preferably 1 to 5 µm.

In the present invention, it is particularly preferred that the liquid crystal layer thickness is 50 (x₁+x₂) or less, more preferably 30 (x₁+x₂) or less, further preferably 20 (x₁+x₂) wherein x₁ and x₂ denote the thickness of transparent electrodes on one and the other substrates, respectively.

As the bistable liquid crystal used in the liquid crystal apparatus of the present invention, ferroelectric chiral smectic liquid crystals may be most suitably used, of which liquid crystals in chiral smectic C phase (SmC*) or H phase (SmH*) are particularly suited. These ferroelectric liquid crystals may be those described in, e.g., U.S. Patents Nos. 4613209, 4614609, 4622165, etc.

Further, in the present invention, driving methods as disclosed in, e.g., U.S. Patents Nos. 4705345, 4707078, etc. may be used in addition to those described above.

Hereinabove, the present invention has been explained with reference to an embodiment of a ferroelectric liquid crystal. It is however possible to apply the present invention also to a TN-liquid crystal or a super-twist nematic liquid crystal (wherein nematic liquid crystal molecules are aligned with a twist angle of about 270 degrees).

As described above, according to the present invention, it has become possible to suppress the occurrence-of color irregularity or change in hue even if a high-luminance three-wavelength light source is used as a backlight.

## Claims

1. A liquid crystal apparatus, comprising:
a liquid crystal cell (10) comprising a pair of substrates (12a, 12b) each having thereon a transparent electrode (13a, 13b), and a liquid crystal layer (16) disposed between said pair of substrates (12a, 12b);
wherein said transparent electrodes (13a, 13b) have a thickness of 84 nm or less, 132 to 168 nm, 196 to 247 nm or 318 to 385 nm;
said liquid crystal layer (16) has a thickness of 5 µm or less;
a fluorescent light source (17) is placed behind said liquid crystal cell (10) from a viewing direction thereof and illuminates said liquid crystal cell (10), said fluorescent light source (17) providing at least three peaks of specific emission energy; and
said pair of substrates (12a, 12b) each have thereon said transparent electrode (13a, 13b) and a dielectric film (14a, 14b) having a larger refractive index than said transparent electrode (13a, 13b).

2. An apparatus according to claim 1, characterized in that said pair of substrates (12a, 12b) have a refractive index n satisfying the relationship of n_{⊥} - 0.1 ≤ n ≤ n_{//} + 0.1, wherein n_{⊥} denotes the refractive index along the shorter molecular axis and n_{//} denotes the refractive index along the longer molecular axis, respectively, of said liquid crystal (16).

3. An apparatus according to claim 1 or 2, wherein said transparent electrode (13a, 13b) has a thickness of 84 nm or less.

4. An apparatus according to claim 1 or 2, wherein said transparent electrode (13a, 13b) has a thickness of 132 to 168 nm.

5. An apparatus according to any of the preceding claims 1 to 4, wherein said dielectric film (14a, 14b) comprises Ta₂O₅ or TiO₂.

6. An apparatus according to any of the preceding claims, wherein said liquid crystal (16) is a ferroelectric liquid crystal.

7. An apparatus according to claim 6, wherein said ferroelectric liquid crystal (16) assumes a non-helical molecular alignment structure.

8. An apparatus according to any of the preceding claims, wherein said pair of substrates (12a, 12b) comprises a first substrate having thereon a first transparent electrode with a thickness of X₁ and a second substrate having thereon a second electrode with a thickness of X₂, and said liquid crystal layer has a thickness of 50 (X₁+X₂) or below.

9. An apparatus according to claim 8, wherein said liquid crystal layer (16) has a thickness of 30 (X₁+X₂) or below.

10. An apparatus according to claim 8, wherein said liquid crystal layer (16) has a thickness of 20 (X₁+X₂) or below.

11. An apparatus according to any of the preceding claims, wherein said liquid crystal layer (16) has a maximum thickness Dmax and a minimum thickness Dmin, and said liquid crystal cell (10) in combination with said light source (17) provides an angle |Δθᵤᵥ| of 9 degrees or less wherein said angle |Δθᵤᵥ| is defined as an angle formed between a line connecting a coordinate original and a chromaticity point defined by coordinates u* and v* at the point of the maximum liquid crystal layer thickness and a line connecting said coordinate original and a chromaticity point defined by coordinates u* and v* at the point of the minimum liquid crystal layer thickness, respectively, on a u*-v* coordinate system according to the CIE 1976 (L*u*v*) space.

12. An apparatus according to claim 11, wherein said angle |Δθᵤᵥ| is 3 degrees or less.

## Patentansprüche

1. Flüssigkristall-Vorrichtung mit:
- einer Flüssigkristallzelle **(10)** mit einem Paar von Substraten **(12a, 12b)**, von denen jedes eine darauf angeordnete transparente Elektrode **(13a, 13b)** aufweist, und mit einer zwischen dem Paar von Substraten **(12a, 12b)** angeordneten Flüssigkristallschicht **(16)**, wobei die transparenten Elektroden **(13a, 13b)** eine Dicke von 84 nm oder weniger, 132 nm bis 168 nm, 196 nm bis 247 nm oder 318 nm bis 385 nm aufweisen, die Flüssigkristallschicht **(16)** eine Dicke von 5 um oder weniger aufweist, eine Fluoreszenzlichtquelle **(17)** in Beobachtungsrichtung hinter der Flüssigkristallzelle **(10)** angeordnet ist und die Flüssigkristallzelle **(10)** beleuchtet, wobei die Fluoreszenzlichtquelle **(17)** mindestens drei Spitzen der spezifischen Emissionsenergie erzeugt, und das Paar von Substraten **(12a, 12b)** jeweils eine darauf angeordnete transparente Elektrode **(13a, 13b)** und eine dielektrische Folie **(14a, 14b)** mit einem größeren Brechungsindex als die transparente Elektrode **(13a, 13b)** aufweist.

2. Vorrichtung gemäß Anspruch 1,
**dadurch gekennzeichnet, daß** das Paar von Substraten **(12a, 12b)** einen Brechungsindex n aufweist, welcher die Beziehung n_{⊥} - 0,1 ≤ n ≤ n_{//} + 0,1 erfüllt, wobei n_{⊥} jeweils den Brechungsindex entlang der kürzeren Molekülachse und n_{||} jeweils den Brechungsindex entlang der längeren Molekülachse des Flüssigkristalls **(16)** bezeichnet.

3. Vorrichtung gemäß Anspruch 1 oder 2, wobei die transparente Elektrode **(13a, 13b)** eine Dicke von 84 nm oder weniger aufweist.

4. Vorrichtung gemäß Anspruch 1 oder 2, wobei die transparente Elektrode **(13a, 13b)** eine Dicke von 132 nm bis 168 nm aufweist.

5. Vorrichtung gemäß einem der vorhergehenden Ansprüche 1 bis 4, wobei die dielektrische Folie **(14a, 14b)** Ta₂O₅ oder TiO₂ aufweist.

6. Vorrichtung gemäß einem der vorhergehenden Ansprüche, wobei der Flüssigkristall **(16)** ein ferroelektrischer Flüssigkristall ist.

7. Vorrichtung gemäß Anspruch 6, wobei der ferroelektrische Flüssigkristall **(16)** eine nichtspiralförmige Molekülorientierungsstruktur aufweist.

8. Vorrichtung gemäß einem der vorhergehenden Ansprüche, wobei das Paar von Substraten **(12a, 12b)** ein erstes Substrat mit einer darauf angeordneten ersten transparenten Elektrode mit einer Dicke x₁ und ein zweites Substrat mit einer darauf angeordneten zweiten Elektrode mit einer Dicke x₂ aufweist, und die Flüssigkristallschicht eine Dicke von 50 (x₁+x₂) oder weniger aufweist.

9. Vorrichtung gemäß Anspruch 8, wobei die Flüssigkristallschicht **(16)** eine Dicke von 30 (x₁+x₂) oder weniger aufweist.

10. Vorrichtung gemäß Anspruch 8, wobei die Flüssigkristallschicht **(16)** eine Dicke von 20 (x₁+x₂) oder weniger aufweist.

11. Vorrichtung gemäß einem der vorhergehenden Ansprüche, wobei die Flüssigkristallschicht **(16)** eine maximale Dicke Dmax und eine minimale Dicke Dmin aufweist, und die Flüssigkristallzelle **(10)** in Kombination mit der Fluoreszenzlichtquelle **(17)** einen Winkel |Δθuv| von 9° oder weniger bildet, wobei der Winkel |Δθuv| als ein Winkel definiert ist, welcher zwischen einer Linie, welche einen Koordinatenursprung und einen durch die Koordinaten u* und v* in dem Punkt der maximalen Flüssigkristall-Schichtdicke bestimmten Farbartpunkt verbindet, und einer Linie ausgebildet ist, welche den Koordinatenursprung und einen durch die Koordinaten u* und v* in dem Punkt der minimalen Flüssigkristall-Schichtdicke bestimmten Farbartpunkt verbindet, in einem u* -v* -Koordinatensystem gemäß dem CIE-1976-(L*u*v*)-Raum.

12. Vorrichtung gemäß Anspruch 11, wobei der Winkel |Δθuv| 3° oder weniger beträgt.

## Revendications

1. Appareil à cristal liquide, comprenant:
une cellule (10) à cristal liquide comprenant une paire de substrats (12a, 12b) portant chacun une électrode (13a, 13b) transparente, et une couche (16) de cristal liquide disposée entre ladite paire de substrats (12a, 12b);
dans lequel
lesdites électrodes (13a, 13b) transparentes ont une épaisseur de 84 nm ou moins, de 132 à 168 nm, de 196 à 247 nm, ou de 318 à 385 nm;
ladite couche (16) de cristal liquide a une épaisseur de 5 µm ou moins;
une source (17) de lumière fluorescente est placée derrière ladite cellule (10) de cristal liquide par rapport à une direction d'observation de celle-ci et éclaire ladite cellule (10) à cristal liquide, ladite source (17) de lumière fluorescente produisant au moins trois pics d'énergie d'émission spécifique; et
ladite paire de substrats (12a, 12b) ont chacun sur eux ladite électrode (13a, 13b) transparente et un film (14a, 14b) diélectrique ayant un indice de réfraction supérieur à celui de ladite électrode (13a, 13b) transparente.

2. Appareil selon la revendication 1, caractérisé en ce que ladite paire de substrats (12a, 12b) ont un indice de réfraction n satisfaisant la relation n_{⊥} - 0,1 _ n _ n_{//} + 0,1, où n_{⊥} représente l'indice de réfraction suivant l'axe moléculaire court et n_{//} désigne l'indice de réfraction suivant l'axe moléculaire long, respectivement, dudit cristal (16) liquide.

3. Appareil selon la revendication 1 ou 2, dans lequel ladite électrode (13a, 13b) transparente a une épaisseur de 84 nm ou moins.

4. Appareil selon la revendication 1 ou 2, dans lequel ladite électrode (13a, 13b) transparente a une épaisseur de 132 à 168 nm.

5. Appareil selon l'une quelconque des revendications 1 à 4 précédentes, dans lequel ledit film (14a, 14b) diélectrique comprend du Ta₂O₅ ou du TiO₂.

6. Appareil selon l'une quelconque des revendications précédentes, dans lequel ledit cristal (16) liquide est un cristal liquide ferroélectrique.

7. Appareil selon la revendication 6, dans lequel ledit cristal (16) liquide ferroélectrique adopte une structure d'alignement moléculaire non hélicoïdale.

8. Appareil selon l'une quelconque des revendications précédentes, dans lequel ladite paire de substrats (12a, 12b) comprend un premier substrat ayant sur lui une première électrode transparente d'une épaisseur X₁ et un second substrat ayant sur lui une seconde électrode d'épaisseur X₂, et ladite couche de cristal liquide a une épaisseur de 50(X₁ + X₂) ou moins.

9. Appareil selon la revendication 8, dans lequel ladite couche (16) de cristal liquide a une épaisseur de 30(X₁+X₂) ou moins.

10. Appareil selon la revendication 8, dans lequel ladite couche (16) de cristal liquide a une épaisseur de 20(X₁+X₂) ou moins.

11. Appareil selon l'une quelconque des revendications précédentes, dans lequel ladite couche (16) de cristal liquide a une épaisseur maximale Dmax et une épaisseur minimale Dmin, et ladite cellule (10) de cristal liquide, en association avec ladite source (17) de lumière produit un angle _Δθᵤᵥ_ de 9 degrés ou moins, ledit angle _Δθᵤᵥ_ étant défini comme étant un angle formé entre une droite reliant une origine de coordonnées à un point de chromaticité défini par des coordonnées u* et v* au point d'épaisseur maximale de la couche de cristal liquide et une droite reliant ladite origine des coordonnées à un point de chromaticité défini par des coordonnées u* et v* au point d'épaisseur minimale de la couche de cristal liquide, respectivement, dans un système de coordonnées u*-v* défini dans l'espace (L*u*v*) CIE 1976.

12. Appareil selon la revendication 11, dans lequel ledit angle _Δθᵤᵥ_ est de 3 degrés ou moins.
